**Europäisches Patentamt**

**European Patent Office**

**Office européen des brevets**

(11) Veröffentlichungsnummer: **0 177 441**
**B1**

(12) **EUROPÄISCHE PATENTSCHRIFT**

(45) Veröffentlichungstag der Patentschrift:
20.12.89

(21) Anmeldenummer: 85810321.1

(22) Anmeldetag: 12.07.85

(51) Int. Cl.⁴: **G 05 B 19/10**

(54) Einstell- und Anzeigevorrichtung an einer elektronischen Nähmaschine.

(30) Priorität: 31.08.84 CH 4172/84

(43) Veröffentlichungstag der Anmeldung:
09.04.86 Patentblatt 86/15

(45) Bekanntmachung des Hinweises auf die Patenterteilung:
20.12.89 Patentblatt 89/51

(84) Benannte Vertragsstaaten:
CH DE FR GB IT LI SE

(56) Entgegenhaltungen:
EP-A- 0 069 046
EP-A- 0 109 182
EP-A- 0 111 992
DE-A- 3 236 944
US-A- 4 373 459

PATENTS ABSTRACTS OF JAPAN, Band 7, Nr. 59, 22. März 1983, Seite 120 M 199; & JP - A - 57 205 043
RADIO AND ELECTRONICS WORLD, September 1983, Seiten 33-35, London, GB; "Rotary encoder interface"

(73) Patentinhaber: FRITZ GEGAUF AG
BERNINA-NÄHMASCHINENFABRIK, Seestrasse,
CH-8266 Steckborn (CH)

(72) Erfinder: Hangarter, Otto, Im Bohl 12,
D-7763 Oehningen-Wangen (DE)
Erfinder: Stillhard, Otmar, Ofenbachstrasse 14,
CH-8266 Steckborn (CH)

(74) Vertreter: Steiner, Martin et al, c/o AMMANN
PATENTANWÄLTE AG BERN Schwarztorstrasse 31,
CH-3001 Bern (CH)

## Beschreibung

Die vorliegende Erfindung betrifft eine Einstell- und Anzeigevorrichtung an einer elektronischen Nähmaschine gemäß Oberbegriff des Anspruchs 1. Bekannte Einstell- und Anzeigevorrichtungen dieser Art sind unbefriedigend, weil sie einerseits keine einfache, sinnfällige Einstellung erlauben, und andererseits auch keine leicht lesbare und interpretierbare Anzeige gewährleisten. Schließlich sind die Möglichkeiten zur Abänderung vorgegebener Einstellwerte nicht vorhanden oder beschränkt.

Bei einer bekannten Einstell- und Anzeigevorrichtung sind für die Einstellung der Stichlänge und -breite Tastenpaare vorgesehen, die mit + und − bezeichnet sind, wobei durch entsprechenden Tastendruck der Einstellwert erhöht oder erniedrigt werden kann. Der eingestellte Wert wird durch Ziffern angezeigt (DE-PS 3 235 121). Wie erwähnt, handelt es sich hier zwar um eine recht einfache Einstell- und Anzeigevorrichtung, sie ist jedoch bezüglich Handhabung kompliziert und wenig benutzungsfreundlich. In der Praxis hat sich dann auch gezeigt, daß besonders Hausfrauen, welche die Nähmaschine nur in größeren Zeitabständen benutzen, Mühe haben, sich mit der modernen Elektronik zurechtzufinden, und immer wieder im Anleitungsbuch nachschlagen müssen. Nichts erinnert mehr an die Einstellvorrichtungen und die damit integrierten Anzeigen herkömmlicher, mechanischer Nähmaschinen. Mühe bereitet aber nicht nur das Einstellen der Maschine sondern auch die wenig beliebten digitalen Anzeigen der Einstellwerte. Analoge Anzeigen sind auf Anhieb leichter verständlich und besser mit einem eventuellen Sollwert oder Grundwert vergleichbar, als digitale Anzeigen. Vorprogrammierte Grundwerteinstellungen sind nicht mehr vorhanden, wenn die Bedienungsperson, um optimale Nähbedingungen zu schaffen, von diesen Grundwerten abweicht. Die Grundwerte sind zwar immer noch in einem Speicher der Maschinen enthalten, die Bedienungsperson hat aber keinen Anhaltspunkt mehr über die Größe eines bestimmten Grundwertes und somit die vorhandene Abweichung von demselben.

Es ist zwar ein elektronisches Regelgerät mit elektrooptischen Analoganzeigen für Ist- und Sollwerte bekannt (EP-A-0 069 046). Als Bedienungselemente für die Einstellung sind Tasten vorgesehen. Auch diese Einstell- und Anzeigeelemente erinnern nicht an herkömmliche Einstellvorrichtungen an Nähmaschinen und konnten daher zu keiner befriedigenden Lösung für Nähmaschinen anregen.

Es ist ferner eine Steueranordnung bekannt, bei welcher die Stellung eines Einstellpotentiometers durch eine elektrooptische Analoganzeige angezeigt wird (EP-A-0 109 182). Durch das Potentiometer ist der Einstellbereich in beiden Richtungen begrenzt, und es ist nicht möglich, ausgehend von einem vorgegebenen, empfohlenen Grundwert in beliebiger Richtung um einen beliebigen Betrag eine Verstellung vorzunehmen, wie es bei elektronischen Nähmaschinen erwünscht ist.

Es ist schließlich im Zusammenhange mit einem bestimmten Steuersystem auch ein von Hand drehbarer digitaler Inkrementalgeber bekannt, der vom Drehwinkel und von der Drehrichtung abhängige Impulsfolgen erzeugt und damit eine digitale Erfassung der Drehbewegung erlaubt (EP-A-0 111 992). Dieser bekannte Inkrementalgeber ist jedoch auch mit Endanschlägen versehen und somit aus den erwähnten Gründen für Nähmaschinen ungeeignet.

Ziel vorliegender Erfindung ist es, spezifisch für Nähmaschinen die Einstellbarkeit zu erleichtern und zu verbessern, die Anzeige zu verbessern und die Einstellmöglichkeiten zu erweitern, also insgesamt die Bedienungsfreundlichkeit erheblich zu verbessern. Anspruch 1 umschreibt die Lösung. Ähnlich wie bei einer herkömmlichen, mechanischen Nähmaschine können die vorhandenen Einstellknöpfe gedreht werden, wobei diese Drehung anschlagfrei um beliebige Winkel in beide Richtungen erfolgen kann, um Einstellungen und Korrekturen in beliebiger Richtung und in beliebigem Ausmaß vornehmen zu können. Als Wandler ist ein Inkrementalgeber vorgesehen, dessen Drehung im einen oder anderen Sinne jeweils eine Änderung des digital gespeicherten Parameters um einen Betrag und in einem Sinne entspricht, der durch den Drehwinkel bzw. die Drehrichtung des betreffenden Einstellorgans bestimmt ist. Maßgebend für die Einstellung der Maschine ist stets der Stand des Speichers, der angezeigt wird.

Die analoge Anzeige vorzugsweise mittels Leuchtbalken vermittelt jederzeit ein klares Bild darüber, welche Einstellung erreicht ist, und in welchem Sinne und in welchem Ausmaße sie eventuell zu ändern ist. Diese Anzeige bietet die Möglichkeit, zugleich zwei Werte, beispielsweise den Wert einer Grundeinstellung, die in der Maschine gespeichert ist, und den effektiv eingestellten, wirksamen Wert in verschiedener Weise anzuzeigen. So kann beispielsweise der Leuchtbalken bis zum effektiven Einstellwert kontinuierlich leuchten, und der Grundwert aus dem Speicher kann zugleich blinkend angezeigt werden. Man hat also jederzeit einen klaren Überblick darüber, ob, und in welcher Richtung und in welchem Ausmaß die wirksame Einstellung von einer empfohlenen Grundeinstellung abweicht.

Es ist damit auch jederzeit möglich, einen bestimmten Nähvorgang, beispielsweise einen Zierstich, entweder mit den empfohlenen, im Maschinenspeicher enthaltenen Werten auszuführen oder aber mit beliebig abweichenden Werten.

Die Erfindung wird nun anhand eines in der Zeichnung dargestellten Ausführungsbeispieles näher erläutert.

Figur 1 ist eine Teilansicht der Nähmaschine mit den für die Erfindung wesentlichen Einstell- und Anzeigeelementen,

Figur 2 zeigt ein Schema der elektronischen Ausrüstung,

Figur 3 zeigt die Schaltung eines Anzeigeorgans,

Figur 4 zeigt einen Vertikalschnitt durch die Einstellvorrichtung und

Figur 5 zeigt ein Anzeigeorgan in größerem Maßstab.

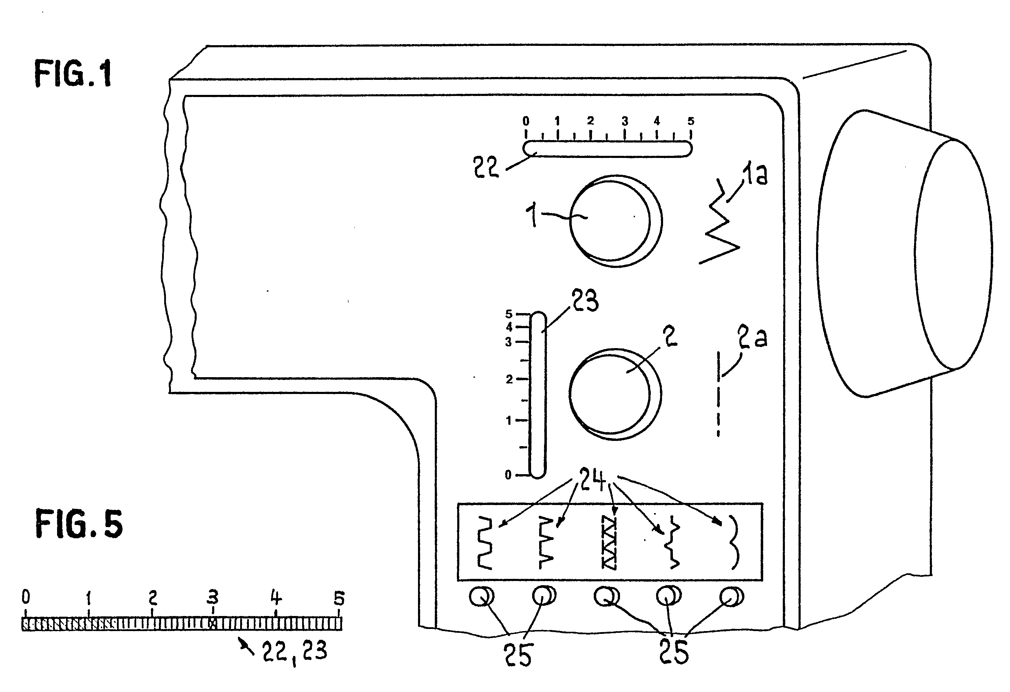

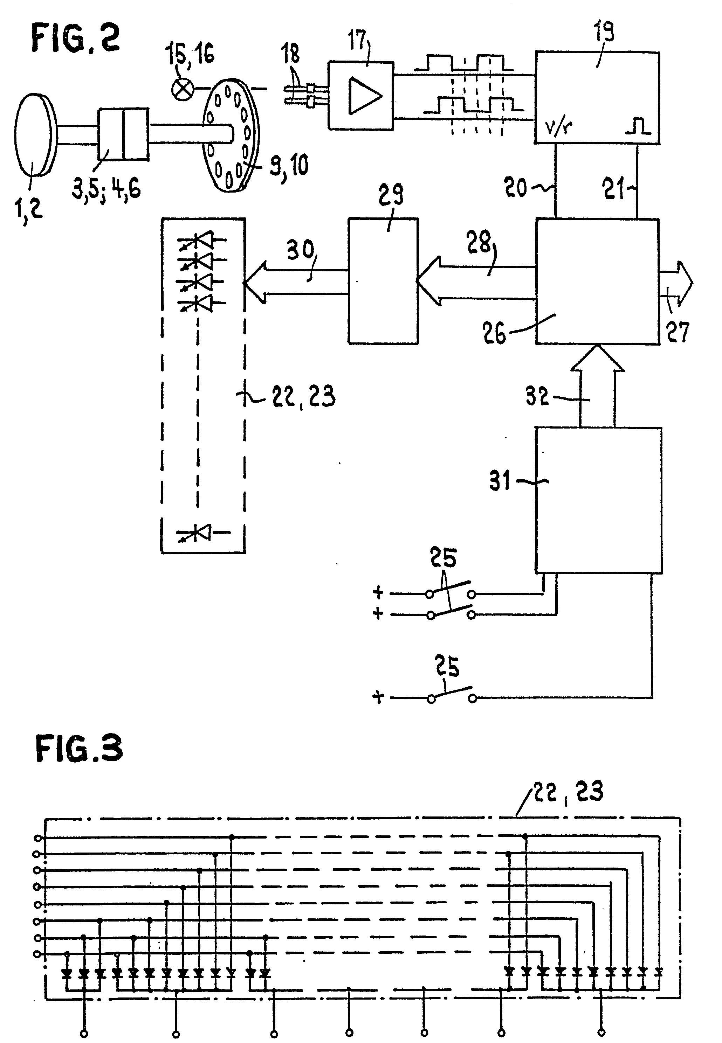

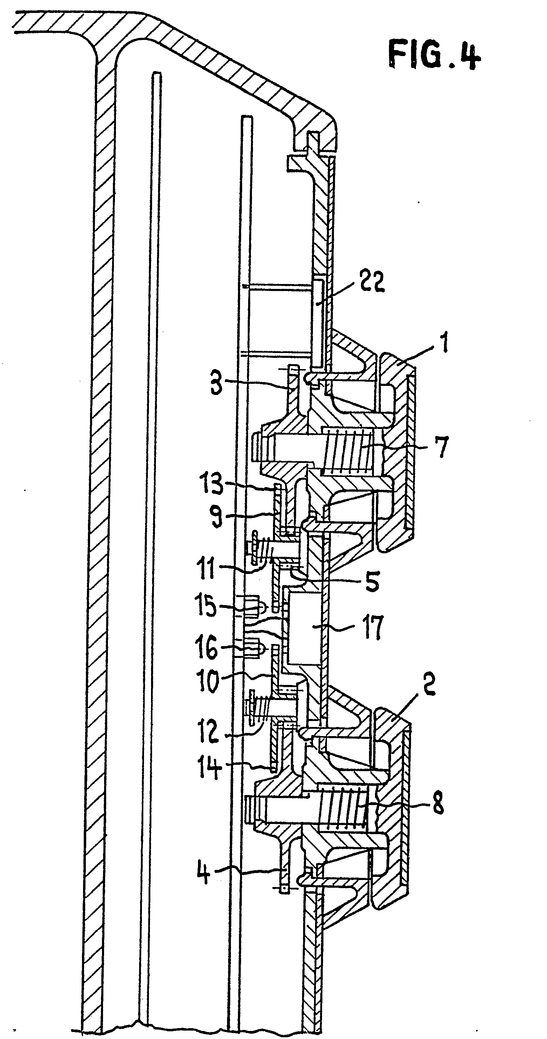

Figur 1 zeigt an der üblichen Stelle der Nähmaschine drehbare Einstellknöpfe 1 und 2, welchen die Symbole 1a bzw. 2a für Stichbreite und Stichlänge zugeordnet sind. Wie Figur 4 zeigt, sind diese Einstellknöpfe 1 und 2 in der Maschinenfront drehbar gelagert und können in beliebiger Richtung anschlagfrei in beiden Richtungen gedreht werden. Auf den Wellen der Einstellknöpfe 1 und 2 sitzt je ein Zahnrad 3 bzw. 4, das mit einem Ritzel 5 bzw. 6 kämmt. Federn 7 bzw. 8 erzeugen einen angemessenen axialen Druck und damit eine angemessene Reibung der Naben der Zahnräder 3 und 4 an der Stirnseite des Lagers, derart, daß die Einstellknöpfe nur unter Überwindung einer angemessenen Reibung gedreht werden können und in den erreichten Stellungen durch Reibung sicher gehalten sind. Die Ritzel 5 und 6 sind einteilig ausgeführt mit je einer Scheibe 9 bzw. 10, und auch gegen diese Elemente wirkt je eine Druckfeder 11 bzw. 12, welche nicht nur ihre axiale Lage sondern auch eine bestimmte angemessene Reibung bestimmt, durch welche die Scheiben 9 und 10 in der jeweils erreichten Stellung gehalten werden. Die Scheiben 9 und 10 weisen am Rand eine Zahnung oder Lochung 13 bzw. 14 auf, in deren Bereich je eine zweckmäßige Lichtquelle 15 bzw. 16 angeordnet ist. Auf der andern Seite der Scheibe ist ein Inkrementalgeber 17 angeordnet, der beiden Scheiben gemeinsam zugeordnet ist. Bei Drehung der Scheiben 9 und 10 werden optische Eingänge des Gebers 17 wechselweise freigegeben oder abgedeckt. Wie in Figur 2 angedeutet, weist jeder Eingang des Gebers 17 nebeneinander zwei Sensoren 18 in solchem Abstand auf, daß am Ausgang des Gebers 17 für jede Scheibe 9 bzw. 10 ein Paar von phasenverschobenen Rechtecksignalen erscheint, welches Paar in einem Detektor 19 in ein Richtungssignal v/r (vorwärts-rückwärts) an einem Ausgang 20, und eine Impulsserie an einem Ausgang 21 umwandelt wird.

Über dem Einstellknopf 1 ist ein Anzeigeorgan 22 in horizontaler Richtung zur sinnfälligen Anzeige der Stichbreite, und seitlich des Einstellknopfes 2 ein Anzeigeorgan 23 in vertikaler Richtung zur sinnfälligen Anzeige der Stichlänge angeordnet. Beide Einstellorgane sind als Leuchtbalken aus einer Reihe von Leuchtdioden, beispielsweise 51 Leuchtdioden aufgebaut. Es ist ihnen je eine Skala zugeordnet, die im Falle der Stichbreite linear, im Falle der Stichlänge nach größeren Werten hin zusammengedrängt ist. Geringe Stichlängen können daher mit größerer Präzision eingestellt und abgelesen werden als größere Stichlängen, für welche hohe Präzision nicht mehr erforderlich ist. Unterhalb der bisher beschriebenen Einstell- und Anzeigeorgane sind Symbole 24 für verschiedene Stichmuster angedeutet, welche mittels Drucktasten 25 gewählt werden können.

Unter diesen Anzeigefeldern und Wähltasten sind weitere, nicht näher bezeichnete Tasten mit Kontrollampen angedeutet.

In Figur 2 ist das aus Rädern 3,5 und 4,6 bestehende Getriebe zwischen je einem der Einstellknöpfe 1 oder 2 und der zugeordneten Scheibe 9 bzw. 10 rein schematisch dargestellt. Die Ausgänge 20 und 21 des Detektors 19 sind mit Eingängen eines Vor- Rückwärtszählers 26 verbunden, dessen Stand jeweils für eine bestimmte Einstellung bzw. Arbeitsweise der Maschine wirksam ist, d.h., seinem Stand entsprechend wird die Stichlänge bzw. Stichbreite in für elektronische Maschinen üblicher Weise gesteuert, und seinem Stand entsprechend wird auch die zugeordnete Anzeige gesteuert. Figur 2 zeigt im Grunde genommen nur die Ausrüstung für eine der einzustellenden und anzuzeigenden Größen, aber es sind für beide Größen gleichartige und gleich arbeitende Vorrichtungen vorhanden, angefangen mit je einem der Einstellknöpfe 1 oder 2, bis hin zu den Anzeige- und Steuervorrichtungen. Der Zähler 26 weist Ausgänge 27 zur erwähnten Steuerung der Maschine, also der Stichlänge bzw. Stichbreite, auf. Weitere Ausgänge 28 führen zu einem Decoder und Multiplexer 29, dessen Ausgänge 30 zur Anzeige 22 bzw. 23 führen. Die Vorrichtung weist je einen Speicher 31 auf, von welchem Ausgänge 32 zum Zähler 26 führen. Die Wählschalter 25, die hier völlig schematisch dargestellt sind und je der Auswahl einer bestimmten Stichart dienen, wirken auf Eingänge des Speichers 31, in welchem jeder Stichart ein Einstell-Grundwert zugeordnet ist. Bei der Vorwahl einer bestimmten Stichart wird im Speicher auch dieser Grundwert abgerufen und über die Ausgänge 32 dem Zähler 26 zugeführt. Damit die Zahl von Ausgängen 30 begrenzt bleibt, sind die 51 Dioden je einer Anzeigevorrichtung 22, 23, gemäß Figur 3 in einer Matrix angeordnet, deren Aufbau und Arbeitsweise keiner besonderen Erläuterung bedarf.

Die dargestellte Einstell- und Anzeigevorrichtung arbeitet wie folgt: Zur Vorbereitung eines nicht vorprogrammierten Nähvorgangs sind unter anderem Stichlänge und Stichbreite einzustellen. Je nachdem, ob der Zähler 26 nach jeder Ausschaltung der Maschine auf Null gehe oder auf dem vorherigen Stand verbleibe, erfolgt die Einstellung von Null aus oder vom früheren Stand aus, durch Drehen an den Knöpfen 1 und 2. Wie erläutert, gelangen beim Drehen jedes Knopfes über den zugeordneten Kanal eine Impulsreihe und ein Richtungssignal an den zugeordneten Zähler 26, so daß der Zählerstand erhöht oder herabgesetzt wird. Der Zählerstand wird laufend auf der zugeordneten Anzeige 22 oder 23 angezeigt, wobei gemäß Figur 5 alle Dioden entsprechend dem Zählerstand beleuchtet sind. Die Länge des leuchtenden Balkens gibt daher auch eine klare, einfach zu interpretierende Vorstellung über den erreichten Wert sowie über die Richtigkeit der Korrekturrichtung. Dabei werden nach dem Multiplexverfahren Gruppen von je acht Dioden der Anzeigen wechselweise gespeist und beleuchtet, wobei die Frequenz derart gewählt ist, daß die Dioden kontinuierlich zu leuchten scheinen. Ist der richtige Zählerstand für Stichlänge und Stichbreite erreicht, bleiben die Zähler 26 auf diesem Stand und werden beim nachfolgenden Nähvorgang über die Leitungen 27 die Maschine steuern.

Bei der Wahl einer bestimmten Stichart mittels eines der Schalter 25, bzw. durch wiederholte Betätigung bestimmter Schalter, gelangt aus dem Speicher 31 je ein Grundwert für Stichlänge und Stichbreite an die zugeordneten Zähler 26, und diese Zähler werden aus ihrem früheren Stand bzw. von Null auf diesen Grundwert gestellt. Zugleich wird dieser Grundwert über den Decoder und Multiplexer 29 an die zugeordnete Anzeige 22 oder 23 übermittelt, und zwar derart, daß nur eine der Zahl des Grundwertes entsprechende Diode gespeist wird. In Figur 5 ist diese Diode, beispielsweise die 30. Diode, angekreuzt, um diese Art der Anzeige anzudeuten. Die Speisung erfolgt derart, daß diese Diode blinkt und damit anzeigt, daß es sich um den aus dem Speicher stammenden, für die gewählte Stichart empfohlenen Grundwert oder Normwert handelt. Mittels der Einstellknöpfe 1 und 2 kann nun aber eine von der Grundeinstellung abweichende Einstellung gewählt werden, indem an den Knöpfen 1 und 2 sinngemäß gedreht wird. Diese abgeänderte Einstellung wird an der zugeordneten Anzeige 22 bzw. 23 durch die dem eingestellten Wert entsprechende Zahl kontinuierlich leuchtender Dioden angezeigt. Auch der Grundwert wird jedoch dauernd an den Decoder und Multiplexer 29 übertragen, und die Schaltung ist so gewählt, daß diejenige Diode, welche dem Grundwert entspricht, periodisch unterbrochen wird, so daß diese Diode blinkt. In Figur 5 ist angedeutet, daß beispielsweise die Dioden 1 bis 14 dauernd leuchten und damit einen wirksamen, eingestellten Wert von 14 anzeigen, während die dem Grundwert 30 entsprechende Diode blinkt, wie durch ein Kreuz angedeutet ist. Zur Übermittlung des Grundwertes an den Decoder und Multiplexer 29 können entweder die Leitungen 32 auch an den Decoder und Multiplexer 29 durchgeschaltet sein, oder aber der Zähler 26 kann zwei Zähleinheiten aufweisen, von welchen die eine jeweils auf einem dem Grundwert entsprechenden, Stand verbleibt, während eine zweite Zähleinheit den willkürlich gewählten bzw. veränderten, für die Steuerung wirksamen Wert enthält. Bei der Wahl einer bestimmten Stichart würde der Grundwert aus dem Speicher 31 an die erste Zähleinheit übermittelt, dort gespeichert und für die Anzeige verfügbar gehalten, und derselbe Grundwert würde in die zweite Zähleinheit übertragen. Erfolgt keine Veränderung des Grundwertes, dient derselbe der Steuerung der Maschine und der Anzeige.

Es sind verschiedene Ausführungsvarianten möglich. Es könnten auch andere Größen, beispielsweise Fadenspannung, Nähfußdruck oder dergleichen in ähnlicher Weise eingegeben, gespeichert und angezeigt werden, wobei auch zu diesen Werten Grundwerte für bestimmte Sticharten verfügbar sein könnten. Da der Decoder und Multiplexer 29 bereits ein recht aufwendiges Programm zu bewältigen hat, indem er auf ein und derselben Anzeige unterschiedliche Anzeigearten zu steuern hat, kann es sich als vorteilhaft erweisen, einen Mikrocomputer vorzusehen, der alle Funktionen der Geräteteile 19, 26, 29 und 31 übernimmt. Anstelle von Inkrementalgebern könnten andere geeignete Wandler vorgesehen sein.

## Patentansprüche

1. Einstell- und Anzeigevorrichtung für mindestens einen Parameter, insbesondere Stichlänge oder -breite, an einer elektronischen Nähmaschine, mit digitalen Speichermitteln (26, 31) für den oder die Parameter, Steuermitteln und Anzeigemitteln (22, 23) zur Steuerung des Nähvorgangs, bzw. zur Anzeige gemäß gespeicherten Werten des oder der Parameter, gekennzeichnet durch mindestens ein sinnfällig in Richtung zu- oder abnehmender Werte anschlagfrei um beliebige Winkel manuell drehbares Einstellorgan (1, 2), das mit einem Inkrementalgeber (9, 10, 15–19) gekoppelt ist, der dem Einstellvorgang entsprechende Zählimpulse sowie ein Richtungssignal an einen zugeordneten Speicher (26) überträgt, und durch Anzeigemittel (22, 23), auf welchen der gespeicherte Wert des Parameters gleichzeitig in Analogform elektrooptisch derart angezeigt wird, daß insgesamt die manuelle Einstellung durch das Einstellorgan anhand dieser Analoganzeige erleichtert wird.

2. Vorrichtung nach Anspruch 1, dadurch gekennzeichnet, daß als Anzeigemittel Leuchtbalken (22, 23) vorgesehen sind.

3. Vorrichtung nach Anspruch 1 oder 2, dadurch gekennzeichnet, daß mindestens ein drehbares Einstellorgan (1, 2) vorgesehen ist, mit welchem eine gelochte oder gezahnte Scheibe (9, 10) gekuppelt ist, die vor lichtempfindlichen Elementen (18) des oder der Inkrementalgeber (15–19) drehbar ist.

4. Vorrichtung nach Anspruch 3, dadurch gekennzeichnet, daß zwischen dem Einstellorgan (1, 2) und der Scheibe (9, 10) ein Übersetzungsgetriebe (3,5; 4,6) angeordnet ist.

5. Vorrichtung nach einem der Ansprüche 1–4, wobei Speichermittel (31) für wählbaren Stichmustern zugeordnete Grundeinstellwerte vorgesehen sind, dadurch gekennzeichnet, daß das Einstellorgan (1, 2) und der Inkrementalgeber (9, 10, 15–19) zur Wahl abweichender Einstellwerte betätigbar sind.

6. Vorrichtung nach Anspruch 5, dadurch gekennzeichnet, daß Schaltmittel (29) vorhanden sind, die auf ein und demselben Leuchtbalken (22, 23), z.B. Leuchtdiodenreihe, zugleich den Grundeinstellwert und einen abweichenden Einstellwert unterscheidbar, z.B. den Grundeinstellwert blinkend, anzuzeigen gestatten.

7. Vorrichtung nach Anspruch 6, dadurch gekennzeichnet, daß eine dem abweichenden Einstellwert entsprechende Anzahl von Elementen, z.B. Dioden, des Leuchtbalkens (22, 23) für kontinuierlich leuchtenden Betrieb, und ein Element an der dem Grundwert entsprechenden Stelle für blinkenden Betrieb anschaltbar sind.

8. Vorrichtung nach einem der Ansprüche 2–7, dadurch gekennzeichnet, daß die Elemente des Leuchtbalkens (22, 23) in eine Matrix geschaltet sind.

9. Vorrichtung nach einem der Ansprüche 1–8, gekennzeichnet durch einen Mikrocomputer zur Steuerung der Einstellung und Anzeige.

## Claims

1. Adjusting and display device for at least one parameter, in particular the stitch length or the stitch width of an electronic sewing machine, comprising digital storing means (26, 31) for the parameter or the parameters, control means and display means (22, 23) for control of the sewing operation respectively for display according to stored values of the parameter or the parameters, characterized by at least one adjusting member (1, 2) manually rotatable without a stop around any angle and in an evident manner in the direction of increasing or decreasing values, which is coupled to an incrementing device (9, 10, 15–19) that transmits count pulses corresponding to the adjusting operation as well as a direction signal to an assigned memory (26), and by display means (22, 23), by which the stored value of the parameter is simultaneously electro-optically displayed in an analog form, such that the manual adjustment by the adjusting member is overall facilitated by said analog display.

2. Device according to claim 1, characterized in that light bars are provided as display means.

3. Device according to claim 1 or 2, characterized in that at least one rotatable adjusting member (1, 2) is provided, to which a perforated or indented disk (9, 10) is coupled which is rotatable in front of light-sensitive elements (18) of the incrementing device (15–19).

4. Device according to claim 3, characterized in that a transmission gear (3,4; 5,6) is disposed between the adjusting member (1, 2) and the disk (9, 10).

5. Device according to one of claims 1 to 4, storing means (31) for basic values assigned to selectable stitch patterns being provided, characterized in that the adjusting member (1, 2) and the incrementing device (9, 10, 15–19) may be operated in order to select differing adjustment values.

6. Device according to claim 5, characterized in that there is circuitry (29) allowing simultaneous display of the basic value and of a differing adjustment on one and the same light bar (22, 23), e.g. a LED row, in a distinctive manner, e.g. by a blinking display of the basic value.

7. Device according to claim 6, characterized in that a number of elements of the light bar (22, 23), e.g. diods, corresponding to the differing adjustment may be switched on for continuous operation and one element at the place corresponding to the basic value, for blinking operation.

8. Device according to one of claims 2 to 7, characterized in that the elements of the light bar (22, 23) are connected in a matrix.

9. Device according to one of claims 1 to 8, characterized by a microcomputer for controlling adjustment and display.

## Revendications

1. Dispositif d'ajustage et d'affichage pour au moins un paramètre, en particulier la longueur ou la largeur du point d'une machine à coudre électronique avec des moyens de stockage digitaux (26, 31) pour le ou les paramètres, des moyens de commande et des moyens d'affichage (22, 23) pour commander le processus de couture, resp. pour afficher selon les valeurs stockées du ou des paramètres, caractérisé par au moins un organe d'ajustage (1, 2) susceptible d'être mis en rotation manuellement d'un angle arbitraire, sans butée, de manière évidente, dans la direction des valeurs croissantes ou décroissantes, qui est couplé à un capteur incrémentiel (9, 10, 15–19) qui transmet à une mémoire associée (26) des impulsions de comptage correspondant au processus d'ajustage ainsi qu'un signal de direction, et par des moyens d'affichage (22, 23) sur lesquels les valeurs stockées du paramètre sont simultanément affichées électro-optiquement sous forme analogique de manière que dans l'ensemble, l'ajustage manuel par l'organe d'ajustage est facilité par cet affichage analogique.

2. Dispositif selon la revendication 1, caractérisé en ce que des barres lumineuses (22, 23) sont utilisées comme moyen d'affichage.

3. Dispositif selon la revendication 1 ou 2, caractérisé en ce qu'il est prévu au moins un organe d'ajustage rotatif (1, 2) auquel est couplé un disque perforé ou denté (9, 10) qui est susceptible de tourner devant des éléments sensibles à la lumière (18) du ou des capteurs incrémentiels (15–19).

4. Dispositif selon la revendication 3, caractérisé en ce qu'un dispositif multiplicateur (3,4; 5,6) est disposé entre l'organe d'ajustage (1, 2) et le disque (9, 10).

5. Dispositif selon l'une des revendications 1–4, dans lequel sont prévus des moyens de stockage (31) pour des valeurs d'ajustage de base associées à des motifs de points à sélectionner, caractérisé en ce que l'organe d'ajustage (1, 2) et le capteur incrémentiel (9, 10, 15–19) peuvent être manipulés afin de choisir des valeurs d'ajustage différentes.

6. Dispositif selon la revendication 5, caractérisé en ce que des moyens de commutation (29) sont présents qui permettent d'afficher simultanément sur la même barre lumineuse (22, 23) p.ex. une rangée de diodes électroluminescentes, la valeur d'ajustage de base et une valeur d'ajustage différente, p.ex. par clignotement de la valeur d'ajustage de base.

7. Dispositif selon la revendication 6, caractérisé en ce qu'un nombre d'éléments, p.ex. des diodes de la barre lumineuse (22, 23) correspondant à une valeur d'ajustage différente est commuté pour un fonctionnement lumineux continu et un élément à la place correspondant à la valeur de base pour un fonctionnement clignotant.

8. Dispositif selon l'une des revendications 2–7, caractérisé en ce que les éléments des barres lumineuses (22, 23) sont connectés dans une matrice.

9. Dispositif selon l'une des revendications 1–8, caractérisé par un microordinateur pour la commande de l'ajustage et de l'affichage.

**FIG.1**

0  1  2  3  4  5

22

1a

1

23

2

2a

24

25     25

**FIG.5**

0     1     2     3     4     5

22, 23

EP 0 177 441 B1

**FIG.2**

**FIG.3**

**FIG.4**